# EUROPÄISCHE PATENTANMELDUNG

(11) **EP 1 513 089 A1**
(43) Veröffentlichungstag der Anmeldung: **09.03.2005**
(21) Anmeldenummer: 04020957.9
(22) Anmeldetag: 03.09.2004
(51) Int. Cl.: G06F 17/60, E05B 19/24, A44B 15/00

(54) **System zur Rückgabe eines verlorenen Schlüssels und Schlüsselanhänger**

(30) Priorität: 05.09.2003 DE 20313780 U
(71) Anmelder: Art di Como Design und modische Accessoires GmbH, 91227 Leinburg/Diepersdorf (DE)
(72) Erfinder: Raab, Rudolf, 91227 Leinburg (DE)
(74) Vertreter: Stippl, Hubert, Dipl.-Ing.

(57) **Zusammenfassung**

System zur Rückgabe eines verlorenen Schlüssels bzw. Schlüsselbundes 2 mit einem Schlüsselanhänger 1, der mit einer Codierung zur Identifizierung des Eigentümers des Schlüsselanhängers 1 durch eine Schlüsselzentrale 5 versehen ist, wobei die Codierung zur Identifizierung des Eigentümers des Schlüsselanhängers 1 eine maschinell lesbare Codierung, insbesondere ein Strichcode 3, vorgesehen ist.

## Beschreibung

Die vorliegende Erfindung betrifft ein System zur Rückgabe eines verlorenen Schlüssels bzw. Schlüsselbundes mit einem Schlüsselanhänger mit den weiteren Merkmalen des Oberbegriffes des Anspruchs 1 sowie einen Schlüsselanhänger mit einer Codierung zur Identifizierung des Eigentümers des Schlüsselanhängers mit den weiteren Merkmalen des Oberbegriffes des Anspruchs 9.

Es ist bereits ein System zur Rückgabe eines verlorenen Schlüssels bzw. Schlüsselbundes bekannt, wobei sich an dem Schlüssel ein Schlüsselanhänger befindet, der mit einer Codierung zur Identifizierung des Eigentümers des Schlüsselanhängers bzw. des Schlüssels durch eine Schlüsselzentrale versehen ist.

Der Schlüsselanhänger ist mit einem Text mit der Aufforderung versehen, dass der Schlüssel unverpackt in einen Briefkasten zu werfen ist. Der Schlüsselanhänger trägt außerdem die Adresse einer Schlüsselzentrale, an welche die Post den Schlüsselanhänger dann weiterleitet. Die Codierung ist in Form einer bestimmten Zahl auf dem Schlüsselanhänger vermerkt. Geht der verlorene Schlüssel schließlich bei der Schlüsselzentrale ein, kann diese über die Codierung sowie die Identifizierungsdaten den Eigentümer ermitteln und der Schlüssel wird umgehend an diesen zurückgeschickt.

Ein solches System zur Rückgabe des verlorenen Schlüssels bzw. Schlüsselbundes ist in dem Gebrauchsmuster DE 201 03 092 offenbart, bei welchem die Weiterleitung der Daten zur Identifizierung einschließlich der Codierung von dem Eigentümer an die Schlüsselzentrale mittels einer drahtlosen elektronischen Datenübermittlung, insbesondere per SMS erfolgt. Bei diesem System muss der Benutzer bzw. Eigentümer des Schlüsselanhängers die Daten zur Identifizierung, also seine Adresse sowie die Codierungsnummer in sein Handy oder seinen Computer eintippen und an die Schlüsselzentrale absenden.

Die Aufgabe der vorliegenden Erfindung besteht darin, ein neues System zur Rückgabe eines verlorenen Schlüssels zur Verfügung zu stellen, bei dem die Möglichkeiten der Nutzung, d. h. der Datenverwertung erheblich erweitert sind im Vergleich zum bisherigen System.

Diese Aufgabe wird durch die gesamte Lehre des Patentanspruchs 1 gelöst. Vorteilhafte Weiterbildungen ergeben sich aus den Unteransprüchen 2 - 8. Ein vorteilhafter Schlüsselanhänger geht aus den Ansprüchen 9 - 15 hervor.

Erfindungsgemäß ist als Codierung zur Identifizierung des Eigentümers des Schlüsselanhängers eine maschinell lesbare Codierung, insbesondere ein Strichcode, auch Balken- oder Barcode genannt, vorgesehen. Dies hat den Vorteil, dass die Codierung neben der Identifizierung des Eigentümers des Schlüsselanhängers auch für andere Nutzungsmöglichkeiten eingesetzt werden kann. So kann der Schlüsselanhänger vom Eigentümer während des Gebrauchs, z. B. in Handelsgeschäften oder dergleichen zur Erfassung von bezahlten Geldbeträgen bzw. zum Sammeln von Punkten bei Payback-Systemen, Bonussystemen und dergleichen verwendet werden kann.

Der Schlüsselanhänger bzw. die Codierung erfüllt demnach mindestens zwei Aufgaben, nämlich die Identifizierung des Eigentümers des Schlüsselanhängers sowie z. B. die Nutzung der Codierung zur Erfassung bei einem Bonussystem.

Vorteilhafterweise kann eine Datenverarbeitungszentrale vorgesehen sein, in welcher Daten zur Identifizierung des Eigentümers des Schlüsselanhängers und/oder Daten bzw. Punkte des Bonussytems oder Punkte-/Sammelsystems speicherbar und verwaltbar sind. Ändert sich beispielsweise die Adresse des Eigentümers des Schlüsselanhängers, so kann dies bei der Datenverarbeitungs-zentrale zentral vorgenommen werden und die Punkte des Bonussystems werden weiterhin auf die korrekte, neue Adresse des Eigentümers gespeichert. Ebenso kann die Datenverarbeitungszentrale die neuen Daten sogleich an die Schlüssel-zentrale weitergeben, damit im Falle des verlorenen Schlüsselanhängers dieser sogleich an die korrekte Adresse zurückgesandt werden kann.

Ferner kann in dem System mindestens ein Handelsunternehmen vorgesehen sein, welches mittels Erfassung der Codierung Bonuspunkte oder dergleichen vergibt. Natürlich kann das Handelsunternehmen Teil eines Bonussystemverbundes sein, dem eine Mehrzahl von Handelsunternehmen angehören. Der Eigentümer kann bei jedem der Handelsunternehmen seinen Schlüsselanhänger mit der darauf vorgesehenen Codierung zur Erfassung der Bonuspunkte nutzen. Vorteilhafter-weise werden dabei alle Bonuspunkte in der zentralen Datenverarbeitungszentrale gesammelt. Dies ist möglich, wenn die einzelnen Handelsunternehmen mit der Datenverarbeitungszentrale datentechnisch in Verbindung stehen.

Zweckmäßigerweise kann die Datenverarbeitungszentrale mit der Schlüssel-zentrale für einen Datenaustausch in Verbindung stehen, insbesondere vernetzt sein. Änderungen der Identifizierung des Eigentümers, wie z. B. dessen Adresse, können entweder bei der Datenverarbeitungszentrale oder bei der Schlüssel-zentrale eingereicht werden, wobei über die Vernetzung dann ein Datenabgleich erfolgt, so dass in jeder Zentrale die aktuellen Daten zur Verfügung stehen.

Ebenso kann das mindestens eine Handelsunternehmen bzw. die in einem Verbund zusammengefassten Handelsunternehmen mit der Schlüsselzentrale für einen Datenaustausch in Verbindung stehen, insbesondere damit vernetzt sein. Hierbei ist es natürlich auch denkbar, dass die Schlüsselzentrale sowie die Datenverarbeitungszentrale zusammengefasst sind, was zu einer Vereinfachung des gesamten Systems beitragen kann.

Vorteilhafterweise kann eine Datenerfassungskarte vorgesehen sein, mit der der Schlüsselanhänger anfangs verbunden ist. In die Datenerfassungskarte kann der Eigentümer des Schlüsselanhängers seine persönlichen Daten, insbesondere seine Adresse eintragen und die Karte dann an die Datenverarbeitungszentrale weiterleiten.

Ebenso ist es auch möglich, dass die Datenerfassung direkt an die Schlüsselzentrale weitergeleitet wird. Ein Datenabgleich zwischen der Daten-verarbeitungszentrale und der Schlüsselzentrale kann dann - wie oben bereits erläutert - auf elektronischem Wege erfolgen.

Die Datenerfassung kann eine Codierung aufweisen, die der Codierung des Schlüsselanhängers entspricht bzw. mit dieser identisch ist. Die Codierung auf der Datenerfassungskarte kann also auch in Form einer maschinell lesbaren Codierung, insbesondere in Form des Strichcodes wie auf dem Schlüsselanhänger vorgesehen sein.

Mit Vorteil kann die Datenerfassungskarte dazu dienen, z. B. bei Werbeveranstaltungen oder dergleichen Personen anzusprechen, damit diese ihre persönlichen Daten mitteilen und entweder die ausgefüllte Datenerfassungskarte dort an eine zuständige Person übergeben oder diese in Form einer Postkarte an eine ausgewählte Adresse oder direkt an die Datenverarbeitungszentrale übermitteln.

Der erfindungsgemäße Schlüsselanhänger ist mit einer Codierung zur Identifizierung des Eigentümers des Schlüsselanhängers bzw. des daran angeordneten Schlüssels oder Schlüsselbundes durch eine Schlüsselzentrale versehen. Außerdem weist der Schlüsselanhänger die Adresse der Schlüsselzentrale auf. Als Codierung zur Identifizierung des Eigentümers des Schlüsselanhängers ist eine maschinell lesbare Codierung, insbesondere ein Strichcode vorgesehen.

Diese maschinell lesbare Codierung ermöglicht es, den Schlüsselanhänger nicht nur für ein Schlüsselrückgabesystem zu verwenden, sondern auch für andere Nutzungsmöglichkeiten einzusetzen. Insbesondere kann die maschinell lesbare Codierung zur Erfassung bei einem Bonus- oder Pay-Back-System oder dergleichen verwendet werden.

Der Schlüsselanhänger kann vorteilhafterweise in seinen Abmessungen kleiner sein als das übliche Scheckkartenformat sein. Z. B. kann die Länge eines im Wesentlichen rechteckigen Schlüsselanhängers ca. 5 cm, die Breite ca. 2,5 cm betragen. Daraus resultiert eine einfache Handhabbarkeit des Schlüsselanhängers sowie dessen geringer Platzbedarf. Diese Abmessungen sind ausreichend, um eine maschinell lesbare Codierung, die Adresse der Schlüsselzentrale sowie eine kurze Anleitung für den Finder des Schlüsselanhängers unterzubringen. Die Anleitung ist zweckmäßigerweise eine kurze Aufforderung, den Schlüsselanhänger in den nächsten Briefkasten zu werfen. Vorteilhafterweise kann der Schlüsselanhänger mit einer Bohrung bzw. Öffnung versehen sein, um diesen an einen Schlüsselring einzuhängen.

Mit Vorteil kann der Schlüsselanhänger neben einer im Wesentlichen rechteckigen Form auch andere geometrische Formen aufweisen. Z. B. kann er oval oder kreisrund sein, womit er besonders auffällig und attraktiv gestaltbar ist. Es besteht auch die Möglichkeit, dass der Schlüsselanhänger die Form von bestimmten Objekten, wie z. B. einer Flasche, einer Wolke usw. aufweist.

Der Schlüsselanhänger kann als flacher Träger ausgestaltet sein, um möglichst wenig Platz in Anspruch zu nehmen. Außerdem ist der Träger vorteilhafterweise bedruckbar bzw. beschriftbar.
Der Träger kann von einer Schutzhülle umgeben sein, um insbesondere die maschinenlesbare Codierung, z. B. den Strichcode, vor äußeren mechanischen Einflüssen wie beispielsweise Kratzern oder dergleichen, oder auch vor chemischen Einflüssen zu schützen. Zweckmäßigerweise ist die Schutzhülle transparent ausgebildet, damit die Codierung gut lesbar bleibt.

Der Träger kann auch oder zusätzlich in einem Gehäuse vorgesehen sein, welches eine Stabilitätserhöhung des Trägers bzw. einen Schutz des Trägers vor mechanischer Beeinträchtigung, z. B. vor Biegung, Verkratzen oder dergleichen bietet. Ein solches Gehäuse kann als zusätzliches Zubehörteil zu dem Schlüsselanhänger vorgesehen sein.

Das Gehäuse kann eine Öffnung aufweisen, durch die die Codierung von außen ablesbar ist. Es besteht auch die Möglichkeit, dass das Gehäuse im Bereich der Codierung eine geringere Stärke oder eine Vertiefung aufweist, so dass ebenfalls eine gute Lesbarkeit gewährleistet bleibt. Eine entsprechende Lesbarkeit kann jedoch auch bereits durch ein entsprechendes Material des Gehäuses, insbesondere durch dessen Transparenz, sichergestellt sein.

Der Träger und/oder das Gehäuse kann zumindest auf einer Seite mit einem Werbeaufdruck versehen sein, so dass der Schlüsselanhänger gleichzeitig einen besonders attraktiven Werbeträger darstellt. Insbesondere kann der Werbeaufdruck von einem Handelsunternehmen sein, welches Teil des Bonussystems ist.

Die Erfindung ist anhand von vorteilhaften Ausführungsbeispielen in den Zeichnungsfiguren näher erläutert. Diese zeigen:
- Fig. 1: eine schematische Darstellung eines Systems zur Rückgabe eines verlorenen Schlüssels bzw. Schlüsselbundes;
- Fig. 2 a: die Vorderseite eines an einen Schlüsselbund angeordneten Schlüsselanhängers;

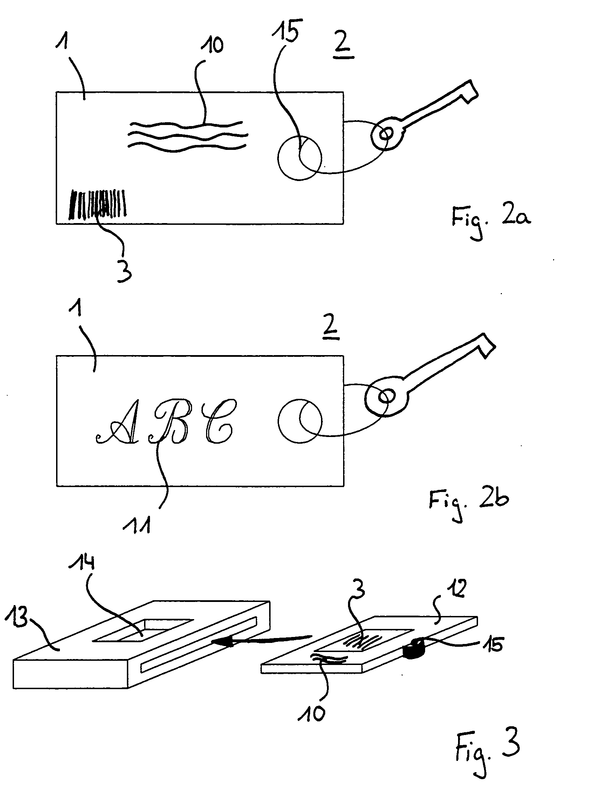

- Fig. 2 b: die Rückseite des Schlüsselanhängers gemäß Fig. 2 a sowie

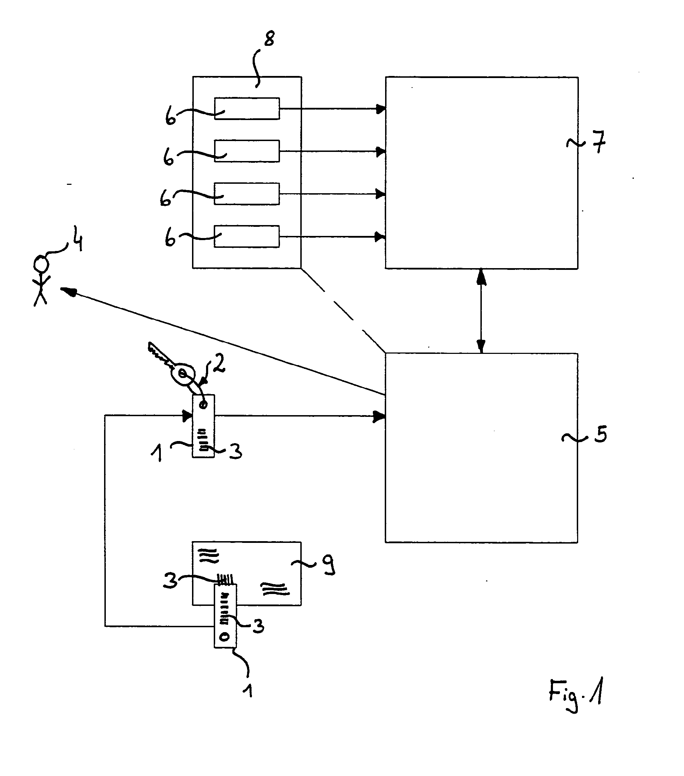

- Fig. 3: eine perspektivische Darstellung eines Schlüsselanhängers mit einem Gehäuse.

Das in Fig. 1 dargestellte System dient der Rückgabe eines verlorenen Schlüssels bzw. Schlüsselbundes 2 mit einem Schlüsselanhänger 1, der mit einer Codierung zur Identifizierung des Eigentümers 4 des Schlüsselanhängers 1 durch eine Schlüsselzentrale 5 versehen ist. Als Codierung zur Identifizierung des Eigentümers 4 des Schlüsselanhängers 1 ist eine maschinell lesbare Codierung, nämlich ein Strichcode 3 vorgesehen. Mittels dieses Strichcodes 3 werden die Möglichkeiten der Nutzung, d. h. der Datenverwertung erheblich erweitert.

Im dargestellten Ausführungsbeispiel wird der Strichcode 3 zur Erfassung bei einem Bonussystem verwendet. Der Strichcode 3 dient also der Identifizierung des Eigentümers 4 des Schlüsselanhängers 1 einschließlich seiner Adresse, damit die Schlüsselzentrale 5 den verlorenen Schlüsselbund 2 an den Eigentümer 4 zurücksenden kann. Außerdem dient die Codierung dem Sammeln von Bonuspunkten bei einem Kauf in einem der Handelsunternehmen 6.

In einer Datenverarbeitungszentrale 7 sind Daten zur Identifizierung des bzw. der Eigentümer von Schlüsselanhängern sowie die Daten bzw. die Punkte des Bonussystems gespeichert und werden dort verwaltet. Die Datenverarbeitungs-zentrale 7 stellt sozusagen das Zentrum des Bonussystems dar.

Ferner sind eine Mehrzahl von Handelsunternehmen 6 vorgesehen, die einem Verbund 8 angehören, wobei die Handelsunternehmen 6 mittels Erfassen der Codierung beim Kauf eines Produktes oder einer Dienstleistung Bonuspunkte oder dergleichen vergeben, welche an die Datenverarbeitungszentrale 7 weitergeleitet werden.

Die Datenverarbeitungszentrale 7 steht mit der Schlüsselzentrale 5 datentechnisch in Verbindung, so dass bei einer Änderung der Daten, z. B. der Adresse des Eigentümers, sogleich ein Datenabgleich zwischen den Zentralen stattfinden kann, so dass jede Zentrale die aktuell gültigen Daten erfasst hat. Es besteht auch die Möglichkeit, dass die Handelsuntemehmen 6 mit der Schlüsselzentrale 5 für einen Datenaustausch in Verbindung stehen. Diese Möglichkeit ist mit gestrichelten Linien dargestellt.

Vor Benutzung des Schlüsselanhängers 1 ist dieser mit einer Datenerfassungskarte 9 verbunden, die ebenfalls einen Strichcode 3 aufweist, der mit dem Strichcode 3 des dazugehörigen Schlüsselanhängers 1 identisch ist. In die Datenerfassungskarte 9 kann der neue Eigentümer 4 seine persönlichen Daten eintragen und die Karte sodann an eines der Handelsunternehmen 6, an die Datenverarbeitungszentrale 7 oder an die Schlüsselzentrale 5 senden. Dort werden die Daten erfasst, so dass stets eine Identifizierung des Schlüsseleigentümers mittels des Strichcodes 3 bei einem verlorenen Schlüsselanhänger 1 erfolgen kann.

Eine Vorder- und Rückansicht des Schlüsselanhängers 1 selbst geht aus den Fig. 2 a und b hervor. Der Schlüsselanhänger 1 ist mit einer Codierung zur Identifizierung des Eigentümers des Schlüsselanhängers 1 bzw. des daran angeordneten Schlüsselbundes 2 durch eine Schlüsselzentrale 5 versehen.

Außerdem weist der Schlüsselanhänger 1 die Adresse 10 der Schlüsselzentrale 5 auf, damit der verlorengegangene Schlüsselanhänger 1 an die Schlüsselzentrale 5 gesendet werden kann. Als Codierung zur Identifizierung des Eigentümers 4 des Schlüsselanhängers 1 ist ein Strichcode 3 vorgesehen. Die Vorteile des Strich-codes 3 mit seinen erweiterten Nutzungsmöglichkeiten sind oben bereits erläutert worden.

Der Schlüsselanhänger 1 ist in seinen Abmessungen kleiner als das übliche Scheckkartenformat, so dass der Schlüsselanhänger 1 in einfacher Weise mit dem Schlüsselbund 2 verstaut werden kann und außerdem weniger der Gefahr einer Verbiegung oder dergleichen ausgesetzt ist.

Der Schlüsselanhänger 1 ist als flacher, bedruckbarer Träger ausgestaltet und kann mit den üblichen Druck- bzw. Beschriftungsverfahren mit dem Strichcode 3 sowie einem Werbeaufdruck 11 versehen werden. Der Träger 12 ist von einer transparenten Schutzhülle umgeben, die jedoch in den Zeichnungsfiguren nicht dargestellt ist. Die Schutzhülle verhindert eine mechanische oder chemische Beeinträchtigung der Bedruckung, insbesondere des Strichcodes 3, aber auch des Werbeaufdrucks 11.

In Fig. 3 ist der Träger 12 in einem Gehäuse 13 angeordnet, welches als starre Schutzhülle einen Schutz des Trägers 12 vor Verbiegung oder einer sonstigen mechanischen Beeinträchtigung bietet. Das Gehäuse 13 weist eine Öffnung 14 im Bereich des Strichcodes 3 auf, durch welche der Strichcode 3 von außen ablesbar ist.

Der Schlüsselanhänger 1 weist außerdem eine Öffnung 15 auf, um ihn an einen Schlüsselring oder dergleichen zu befestigen.

## Patentansprüche

1. System zur Rückgabe eines verlorenen Schlüssels bzw. Schlüsselbundes (2) mit einem Schlüsselanhänger (1), der mit einer Codierung zur Identifizierung des Eigentümers des Schlüsselanhängers (1) durch eine Schlüsselzentrale (5) versehen ist,
**dadurch gekennzeichnet, dass**
die Codierung zur Identifizierung des Eigentümers des Schlüsselanhängers (1) eine maschinell lesbare Codierung, insbesondere ein Strichcode (3), vorgesehen ist.

2. System nach Anspruch 1,
**dadurch gekennzeichnet, dass**
die Codierung zur Erfassung bei einem Bonussystem, Punkte-Sammel-System oder dergleichen verwendbar ist.

3. System nach einem der Ansprüche 1 oder 2,
**dadurch gekennzeichnet, dass**
eine Datenverarbeitungszentrale (7) vorgesehen ist, in welcher Daten zur Identifizierung des Eigentümers des Schlüsselanhängers (1) und/oder Daten bzw. Punkte des Bonussystems oder dergleichen speicherbar und verwaltbar sind.

4. System nach einem der vorhergehenden Ansprüche,
**dadurch gekennzeichnet, dass**
mindestens ein Handelsunternehmen (6) vorgesehen ist, welches mittels Erfassung der Codierung Bonuspunkte oder dergleichen vergibt.

5. System nach einem der vorhergehenden Ansprüche,
**dadurch gekennzeichnet, dass**
die Datenverarbeitungszentrale (7) mit der Schlüsselzentrale (5) für einen Datenaustausch in Verbindung steht, insbesondere vernetzt ist.

6. System nach einem der vorhergehenden Ansprüche,
**dadurch gekennzeichnet, dass**
das mindestens eine Handelsunternehmen (6) mit der Schlüsselzentrale (7) für einen Datenaustausch in Verbindung steht, insbesondere vernetzt ist.

7. System nach einem der vorhergehenden Ansprüche,
**dadurch gekennzeichnet, dass**
eine Datenerfassungskarte (9) vorgesehen ist, mit der der Schlüsselanhänger (1) anfangs verbunden ist.

8. System nach Anspruch 7,
**dadurch gekennzeichnet, dass**
die Datenerfassungskarte (9) eine Codierung aufweist, die der Codierung des Schlüsselanhängers (1) entspricht bzw. mit dieser identisch ist.

9. Schlüsselanhänger mit einer Codierung zur Identifizierung des Eigentümers des Schlüsselanhängers (1) bzw. des daran angeordneten Schlüssels oder Schlüsselbundes (2) durch eine Schlüsselzentrale (5) sowie mit der Adresse (10) der Schlüsselzentrale (5),
**dadurch gekennzeichnet, dass**
als Codierung zur Identifizierung des Eigentümers des Schlüsselanhängers (1) eine maschinell lesbare Codierung, insbesondere ein Strichcode (3), vorgesehen ist.

10. Schlüsselanhänger nach Anspruch 9,
**dadurch gekennzeichnet, dass**
der Schlüsselanhänger (1) in seinen Abmessungen kleiner ist als das übliche Scheckkartenformat.

11. Schlüsselanhänger nach einem der Ansprüche 9 oder 10,
**dadurch gekennzeichnet, dass**
der Schlüsselanhänger (1) als flacher Träger (12) ausgestaltet ist.

12. Schlüsselanhänger nach einem der Ansprüche 9 - 11,
**dadurch gekennzeichnet, dass**
der Träger (12) von einer Schutzhülle umgeben ist.

13. Schlüsselanhänger nach einem der Ansprüche 9 - 11,
**dadurch gekennzeichnet, dass**
der Träger (12) in einem Gehäuse (13) angeordnet ist.

14. Schlüsselanhänger nach Anspruch 13,
**dadurch gekennzeichnet, dass**
das Gehäuse (13) eine Öffnung (14) aufweist, durch welche die Codierung von außen ablesbar.

15. Schlüsselanhänger nach einem der Ansprüche 9 - 14,
**dadurch gekennzeichnet, dass**
der Träger (12) und/oder das Gehäuse (13) mit einem Werbeaufdruck (11) versehen sind/ist.
